# EUROPÄISCHE PATENTSCHRIFT

(11) **EP 2 858 186 B1**
(45) Veröffentlichungstag und Bekanntmachung des Hinweises auf die Patenterteilung: **12.12.2018**
(21) Anmeldenummer: 14186067.6
(22) Anmeldetag: 24.09.2014
(51) Int. Cl.: H02B 1/21

(54) **Sammelschienen-Adapter**
Busbar adapter
Adaptateur de barre omnibus

(30) Priorität: 30.09.2013 DE 102013110788
(43) Veröffentlichungstag der Anmeldung: 08.04.2015
(73) Patentinhaber: Klaus Bruchmann GmbH, 4616 Weißkirchen an der Traun (AT)
(72) Erfinder: Bruchmann, Klaus, 96450 Coburg (DE)
(74) Vertreter: Appelt, Christian W.

(56) Entgegenhaltungen:
- DE-A1- 10 061 940
- US-A- 5 938 461
- US-A1- 2008 002 338

## Beschreibung

Die vorliegende Erfindung bezieht sich auf einen Sammelschienen-Adapter, mittels dem elektrische Geräte, insbesondere elektrische Installationsgeräte, an einem Sammelschienensystem befestigt werden. Solche Sammelschienen-Adapter eignen sich insbesondere für elektrische Sammelschienensysteme, insbesondere für 3-phasige Sammelschienensysteme und insbesondere zur Befestigung von Sicherungssystemen, Schaltersicherungseinheiten etc. aber auch für alle anderen elektrischen Installationsgeräte.

Im Stand der Technik sind Sammelschienen-Adapter bekannt, die aus mehreren Einzeleinheiten hergestellt werden und vor Auslieferung zusammengesetzt werden. Solche Geräte können bspw. ein Unterteil umfassen, das an das Sammelschienensystem befestigt werden kann, und ein Oberteil umfassen, an das elektrische Vorrichtungen befestigt werden. Ein solcher Sammelschienen-Adapter ist beispielsweise aus der EP 0 642 197 A1 bekannt, wobei Adapterunterteil und Adapteroberteil über eine Vielzahl von in Längsrichtung des Adapterunterteiles verlaufende Haltestege einerseits und eine Vielzahl an den entsprechenden Stellen des Adapteroberteils angeordnete Haltenasen andererseits miteinander verbunden sind, wobei zusätzlich seitliche Verbindungselemente vorgesehen sind, die sowohl mit Adapteroberteil als auch mit Adapterunterteil verbunden sind und beide nun fertig montierten Teile umschließen. Der fertig montierte Adapter wird dann an den Nutzer gegeben, eine Trennung der einzelnen Bauteile durch den Nutzer ist nicht vorgesehen.

Ferner ist aus der US 5,938,461 ein Geräteadapter für Stromsammelschienen bekannt, der ein Gehäuse aufweist, das in Längsrichtung in zwei Seitenhälften geteilt ist, wobei ein als Schieber ausgebildeter Deckel vorgesehen ist, der zwischen die beiden Gehäusehälften geschoben werden kann.

Aus der US 2008/002338 A1 und aus der DE 100 61 940 A1 sind jeweils Adapter bekannt, die ein Oberteil und ein Unterteil aufweisen, wobei zur Befestigung dieser beiden Elemente an der Unterseite des Oberteils Haken vorgesehen sind, die in zugehörige Haken eingreifen, die auf der Oberseite des Unterteils vorgesehen sind.

Es ist eine Aufgabe der vorliegenden Erfindung, einen Sammelschienen-Adapter zur Verfügung zu stellen, der besonders einfach zu bedienen ist und der auf besonders einfache und klare Weise seinen momentanen Betriebszustand anzeigt und bei dem Fehlbedienungen vermieden werden.
Die Aufgabe wird durch einen Sammelschienen-Adapter gemäß Anspruch 1 gelöst, die Ansprüche 2 bis 14 betreffen besonders vorteilhafte Ausführungsformen des erfindungsgemäßen Sammelschienen-Adapters.

Gemäß der Erfindung umfasst der Sammelschienen-Adapter ein Unterdeck-Element, das auf seiner Unterseite mindestens ein Befestigungselement zum Befestigen des Sammelschienen-Adapters an einer oder mehreren Sammelschienen umfasst. Der erfindungsgemäße Sammelschienen-Adapter umfasst auch ein Oberdeck-Element zum Aufsetzen und Befestigen von elektrischen Installationsgeräten, wobei das Oberdeck-Element lösbar mit dem Unterdeck-Element verbunden ist.
Erfindungsgemäß umfasst eines der Deck-Elemente (erstes Deck-Element), entweder das Oberdeck-Element oder das Unterdeck-Element, auf jeder Seite, bevorzugt auf einer Seite, die das Element in Längsrichtung abschließt, zwei Stirnwände mit jeweils mindestens einer Öffnung. Das andere Deck-Element (zweites Deck-Element) umfasst erfindungsgemäß auf jeder Seite, bevorzugt auf einer Seite, die das Element in Längsrichtung abschließt, ebenfalls zwei Stirnwände mit jeweils mindestens einem Vorsprung, wobei sich die Vorsprünge des anderen (zweiten) Deck-Elements bevorzugt alle in dieselbe Richtung erstrecken. Die Längsachse des Unterdeck- und des Oberdeck-Elements erstreckt sich bevorzugt senkrecht zur Längserstreckung der Sammelschienen.
Gemäß der Erfindung befinden sich die Stirnwände jeweils an den Längsenden des Unterdeck-Elements bzw. des Oberdeck-Elements. Es ist jedoch gemäß der Erfindung auch möglich, dass die Stirnwände sich nicht an einer Seite des Unterdeck- bzw. des Oberdeck-Elements befinden, die das jeweilige Element in Längsrichtung abschließen, sondern dass sich zumindest eine der Stirnwände mit Abstand von den Längsenden, d. h. in Längsrichtung zwischen den Längsenden der Deck-Elemente befindet.
Erfindungsgemäß sind das Unterdeck-Element und das Oberdeck-Element so ausgebildet, dass das Oberdeck-Element in einer Bewegungsrichtung relativ zu dem Unterdeck-Element auf das Unterdeck-Element aufgesetzt werden kann, so dass es in eine Betriebsposition gebracht werden kann, wobei diese relative Bewegungsrichtung zumindest eine Bewegungskomponente parallel oder antiparallel zur Längsachse des Unterdeck-Elements umfasst. Erfindungsgemäß erstrecken sich die Vorsprünge des einen (ersten) Deck-Elements in einer Betriebsposition des Sammelschienen-Adapters zumindest teilweise in zugehörige Öffnungen des anderen (zweiten) Deck-Elements.

Der Sammelschienen-Adapter umfasst ferner eine Verriegelungsvorrichtung, die in ihrer Verriegelungsposition eine Verschiebung des Oberdeck-Elements relativ zum Unterdeck-Element verhindert.

Ein solcher Sammelschienen-Adapter hat den Vorteil, dass das Oberdeck-Element sehr einfach auf das Unterdeck-Element aufgesetzt werden kann, zumal die ineinander greifenden Elemente, nämlich die Vorsprünge in dem einen (ersten) Deck-Element und die Öffnungen in dem anderen (zweiten) Deck-Element, die an den Stirnseiten angeordnet sind, für den Benutzer gut sichtbar sind, auch während des Aufsetzens und Befestigens des Oberdeck-Elements auf dem Unterdeck-Element. Dies wird dadurch unterstützt, dass die entsprechenden Sammelschienen-Adapter in der Regel so eingebaut sind, dass zumindest eine Stirnseite dem Nutzer zugewandt eingebaut ist. Dies gilt insbesondere für Stirnseiten, die an den Längsenden angeordnet sind, aber auch für Stirnseiten, die etwas entfernt von den Längsenden, in Längsrichtung nach innen versetzt, angeordnet sind.
Besonders vorteilhaft ist dabei, dass das Ineinandergreifen der Vorsprünge des einen (ersten) Deck-Elements und der Öffnungen in dem anderen (zweiten) Deck-Element auch während des Einsetzens für den Nutzer sichtbar ist, bevorzugt zumindest für eine der Stirnwände, da die entsprechenden Elemente auch während des Vorgangs des Befestigens des Oberdeck-Elements an dem Unterdeck-Element für den Nutzer sichtbar sind und nicht durch das Oberdeck-Element abgedeckt werden.

Ein weiterer möglicher Vorteil besteht darin, dass der Nutzer auch optisch direkt prüfen kann, ob das Oberdeck-Element sicher in einem Betriebszustand auf dem Unterdeck-Element befestigt ist, da er auch in einem Betriebszustand des Sammelschienen-Adapters bevorzugt zumindest an einer Stelle sehen kann, ob die Vorsprünge des einen (ersten) Deck-Elements in die Öffnung des anderen (zweiten) Deck-Elements eingreifen.
Da die entsprechenden Vorsprünge und Öffnungen am Oberdeck-Element und am Unterdeck-Element auch auf den jeweiligen Stirnseiten vorhanden sind, wird eine sichere und zuverlässige Befestigung der beiden Elemente sichergestellt, obwohl nur sehr wenige Befestigungselemente vorgesehen sind und insbesondere über die Längserstreckung des Oberdeck-Elements und des Unterdeck-Elements auf zusätzliche Befestigungselemente verzichtet werden kann.

Die Sichtbarkeit der Vorsprünge und/oder der Öffnungen an dem Oberdeck-Element und dem Unterdeck-Element sorgt auch dafür, dass der Nutzer jederzeit sehen kann, ob die jeweiligen Elemente miteinander fluchten und daher die Deck-Elemente in eine Betriebsposition gebracht werden können. Bei dem im Stand der Technik bekannten Vorrichtungen, bei denen zumindest eine Vielzahl oder alle Befestigungselemente nicht sichtbar sind, besteht dagegen die Gefahr, dass der Nutzer in den Fällen, in denen sich die Deck-Elemente nicht einfach in eine Betriebsposition bringen lassen, einen erhöhten Kraftaufwand aufwendet, was möglicherweise zur Zerstörungen von Rast-, Befestigungs- oder Verbindungselementen führt.

Bei einer besonders bevorzugten Ausführungsform umfasst das eine (erste) Deck-Element jeweils zwei Öffnungen in jeder Stirnwand, während das andere (zweite) Deck-Element jeweils zwei Vorsprünge auf jeder Stirnwand umfasst. Dies hat den Vorteil, dass bei einer sehr geringen Anzahl von Vorsprüngen bzw. Öffnungen dennoch eine absolut sichere relative Positionierung der beiden Deck-Elemente sichergestellt wird. Aufgrund der geringen Anzahl der Befestigungs- bzw. Verbindungselemente ist das Einsetzen für den Nutzer sehr übersichtlich, so dass Fehlbedienungen vermieden werden, gleichzeitig wird Gewicht gespart, ohne dass Einbußen im Hinblick auf die sichere Positionierung der beiden Deck-Elemente relativ zueinander hingenommen werden müssen.

Bei einer bevorzugten Ausführungsform besteht mindestens ein Vorsprung auf einer Stirnwand des einen (ersten) Deck-Elements aus zwei oder gar mehreren Teilvorsprüngen, wobei Ausnehmungen dazwischen vorgesehen sind. Dies erspart zusätzlich Gewicht, ohne die gute Sichtbarkeit des Vorsprungs für den Nutzer oder die sichere Positionierung einzuschränken.

Bei einer anderen Ausführungsform ist mindestens ein Vorsprung auf einer Stirnseite ringförmig oder teilringförmig ausgebildet. Auch dies sorgt bei einem geringen Gewicht für eine gute Sichtbarkeit, ohne Einbußen im Hinblick auf die Stabilität oder die Exaktheit der Positionierung der beiden Deck-Elemente relativ zueinander hinnehmen zu müssen.

Bei einer besonders bevorzugten Ausführungsform ist mindestens ein Vorsprung auf einer Stirnseite des anderen (zweiten) Deck-Elements so ausgebildet, dass er durch eine zugehörige Öffnung des einen Deck-Elements hindurchragt. Dies stellt sicher, dass nicht nur eine optische Überprüfung der korrekten Positionierung in der Betriebsposition möglich ist, sondern auch erfühlt bzw. ertastet werden kann, ob der Vorsprung durch eine entsprechende Öffnung hindurchragt. Bevorzugt ragt der mindestens eine Vorsprung 0,5 mm bis 2 mm, insbesondere 1-2 mm aus der Öffnung heraus, wenn sich der Sammelschienen-Adapter in seiner Betriebsposition befindet. Hierdurch wird eine ausreichende Tastkontrolle durch den Nutzer ermöglicht.

Bei einer bevorzugten Ausführungsform sind die Öffnungen des einen (ersten) Deck-Elements und die Vorsprünge anderen (zweiten) Deck-Elements ausschließlich auf den jeweiligen Stirnflächen der Elemente vorgesehen, während über die Längserstreckung der beiden Elemente keine weiteren Befestigungs- oder Rastelemente vorgesehen sind.

Dies stellt sicher, dass nicht möglicherweise durch Nutzer nicht-sichtbare Elemente beim Einsetzen nicht exakt fluchten, dadurch das Einsetzen behindern, was auch zu Beschädigungen der Befestigungselement führen kann. Gleichzeitig ermöglicht eine solche Anordnung von Befestigungselementen eine dünnere Bauweise der Deck-Elemente über die Längserstreckung und damit ein geringeres Gewicht. Auch wird vermieden, dass eine Vielzahl von Elementen, die ansonsten möglicherweise an der Unterseite der Schienenelemente vorgesehen sind, durch häufiges Einsetzen und häufige Entnahmen beschädigt werden.

Bei einer bevorzugten Ausführungsform umfasst der Sammelschienen-Adapter auch eine Verriegelungsvorrichtung, bevorzugt mit einem Verriegelungsschieber und einer Verriegelungsaufnahme, in die der Verriegelungsschieber eingreift, wenn er sich in seiner Verriegelungsposition befindet und wenn sich das Oberdeck-Element und das Unterdeck-Element in ihrer Betriebsposition befindet. Bevorzugt ist dabei der Verriegelungsschieber an einer Stirnwand des Unterdeck-Elements vorgesehen, während bevorzugt die Verriegelungsaufnahme oder die Verriegelungsaufnahmen an einer Stirnwand des Oberdeck-Elements vorgesehen sind, insbesondere an den Außenseiten der Stirnwände des Oberdeck-Elements bzw. des Unterdeck-Elements. Auf diese Weise wird eine sehr einfache und effektive Verriegelung ermöglicht, zumal zuverlässig eine Verschiebung in einer Richtung parallel (oder anti-parallel) zur Längsachse und in Richtung eines Bewegens aus der Betriebsposition heraus vermieden wird. Das Verhindern einer Bewegung in einer Richtung parallel oder antiparallel zur Längsrichtung der Elemente ist ausreichend, weil durch den Eingriff der Vorsprünge in die Öffnungen eine Abnahme des Oberdeck-Elements in einer Richtung senkrecht zur Längsachse nicht möglich ist.

Darüber hinaus kann das Verriegelungselement an einer sichtbaren Stelle an der Außenseite einer Stirnwand des Unterdeck-Elements und/oder des Oberdeck-Elements angeordnet sein, bevorzugt an einer Stirnseite, die im eingebauten Zustand dem Nutzer zugewandt ist, was dem Nutzer noch besser ermöglicht, auf einen Blick den Betriebszustand des Sammelschienen-Adapters zu erfassen.

Bei einer weiteren Ausführungsform ist es auch möglich, dass ein Rastelement an mindestens einem Vorsprung vorgesehen ist, beispielsweise eine federbelastete Kugel oder ein federbelasteter Stift, der dafür sorgt, dass ein Einrasten des Oberdeck-Elements erreicht wird, sobald sich dieses in seiner Betriebsposition auf dem Unterdeck-Element befindet. Eine solche federbelastete Kugel oder ein federbelasteter Stift sind bevorzugt in einer radialen nach außen weisenden Richtung vorgespannt, wenn im Wesentlichen kreis- oder ringförmige Vorsprünge und Öffnungen vorgesehen sind. Bei Vorsprüngen mit eckigem Querschnitt wird das Rastelement bevorzugt in einer Außenrichtung vorgespannt, beispielsweise normal zu einer Randbegrenzung des Vorsprungs.

Bei einer besonders bevorzugten Ausführungsform umfasst der Sammelschienen-Adapter auch einen Berührungsschutzelement, das bevorzugt an dem Unterdeck-Element befestigt oder in das Unterdeck-Element fest eingesetzt und verrastet ist, so dass es von dem Benutzer nicht gelöst werden kann. Dies ist insbesondere von Bedeutung, da bei dem Sammelschienen-Adapter gemäß der vorliegenden Erfindung vorgesehen ist, dass auch ein Nutzer während des normalen Betriebs das Oberdeck-Element abnimmt. In diesem Falle sorgt das Berührungsschutzelement dafür, dass gegebenenfalls stromführende Elemente und Kontakte so abgedeckt werden, dass der Nutzer sie auch dann nicht versehentlich berühren kann, wenn das Oberdeck abgenommen ist.

Bei einer besonderen Ausführungsform umfasst der Sammelschienen-Adapter auch eine Tragschiene zum Befestigen von elektrischen Geräten, die in unterschiedlichen Positionen an dem Sammelschienen-Adapter befestigt werden kann. Eine bevorzugte Ausführungsform einer solchen Tragschiene ist beispielsweise in der DE 202 11 940 Ul des gleichen Anmelders offenbart ist, deren Offenbarungsgehalt hiermit vollständig in die vorliegende Anmeldung mit einbezogen wird.

Diese und weitere Merkmale und Eigenschaften des erfindungsgemäßen Sammelschienen-Adapters werden anhand der nachfolgenden Zeichnungen, die bevorzugte Ausführungsformen zeigen, noch deutlicher:
Fig. 1 zeigt eine perspektivische Ansicht einer Ausführungsform eines erfindungsgemäßen Sammelschienen-Adapters, wobei das Oberdeck-Element und das Unterdeck-Element nicht zusammengesetzt sind,
Fig. 2 zeigt die in Fig. 1 gezeigte Ausführungsform aus einer leicht anderen Perspektive;
Fig. 3 zeigte eine perspektivische Darstellung der in den Figuren 1 und 2 gezeigten Ausführungsform des Sammelschienen-Adapters, wobei sich der Sammelschienen-Adapter in seiner Betriebsposition befindet;
Fig. 4 zeigt die in Fig. 3 gezeigte Ausführungsform aus einer leicht anderen Perspektive;
Fig. 5 zeigt eine perspektivische Ansicht einer weiteren Ausführungsform eines erfindungsgemäßen Sammelschienen-Adapters, wobei das Oberdeck-Element und das Unterdeck-Element nicht zusammengesetzt sind;
Fig. 6 zeigt eine perspektivische Ansicht einer weiteren Ausführungsform eines erfindungsgemäßen Sammelschienen-Adapters, wobei das Oberdeck-Element und das Unterdeck-Element nicht zusammengesetzt sind;
Fig. 7 zeigt die in Fig. 6 gezeigte Ausführungsform aus einer leicht anderen Perspektive;
Fig. 8 zeigt einen Querschnitt durch die in den Fig. 6 und 7 gezeigte Ausführungsform, wobei das Oberdeck-Element und das Unterdeck-Element zusammengesetzt sind und wobei der Sammelschienen-Adapter verriegelt ist; und
Fig. 9 zeigt den in Fig. 8 gezeigten Querschnitt der Ausführungsform, wobei jedoch der Sammelschienen-Adapter entriegelt ist.

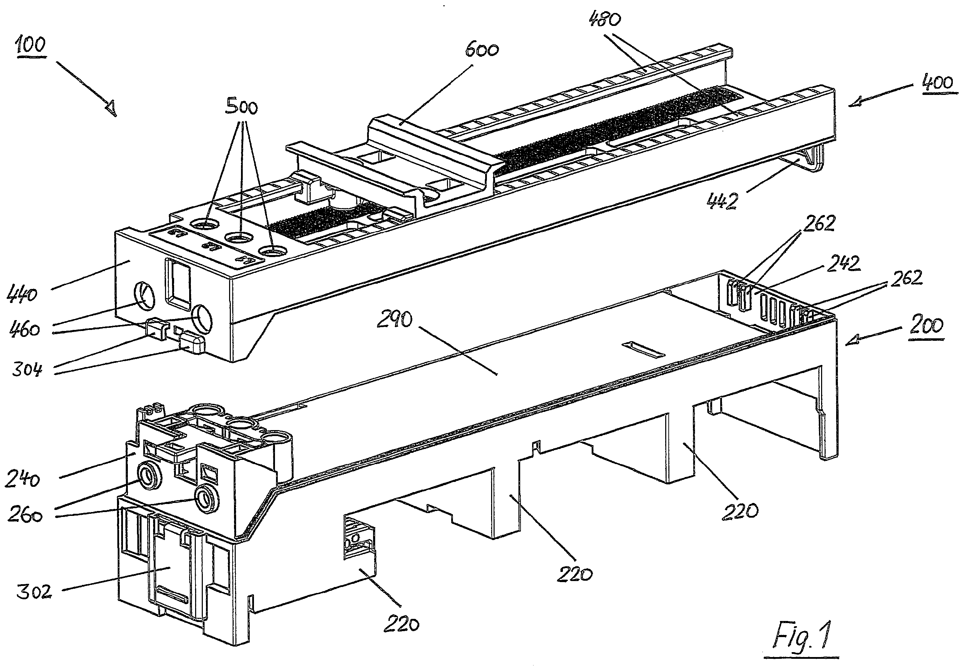

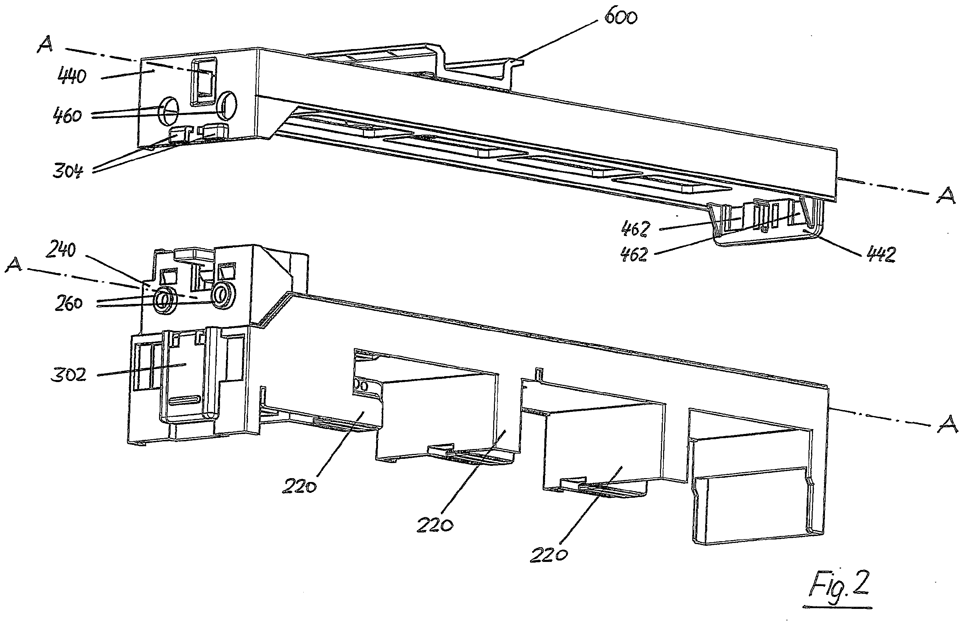

Die Figuren 1 und 2 zeigen eine Ausführungsform eines Sammelschienen-Adapters 100 mit einem Unterdeck-Element 200 und einem Oberdeck-Element 400, wobei die beiden Deck-Elemente 200, 400 lösbar miteinander verbindbar sind und in den Figuren 1 und 2 in einer nicht-verbundenen Darstellung gezeigt sind.

Das Unterdeck-Element 200 umfasst Befestigungselemente 220 zum Befestigen des Sammelschienen-Adapters 100 an Sammelschienen, wobei der in den Figuren dargestellte Sammelschienen-Adapter 100 ein Adapter für ein 3-poliges System ist, so dass insgesamt 3 Befestigungselemente 220 zum Befestigen an insgesamt 3 Sammelschienen vorgesehen sind.

Das Oberdeck-Element 400 umfasst in Längsrichtung, also parallel zu seiner Längsachse A (siehe Fig. 2), verlaufende Haltestege 480, auf denen eine Tragschiene 600 befestigt ist, die in unterschiedlicher Position an dem Oberdeck-Element 400 angebracht werden kann und der Aufnahme von elektrischen Geräten, insbesondere von elektrischen Installationsgeräten, wie beispielsweise Schaltersicherungseinheiten, dient.

In den Figuren 1 und 2 sind auch gut die Zugänge für drei Anschlüsse 500 zu sehen, nachdem es sich um einen 3-poligen Sammelschienen-Adapter 100 handelt. Details dieser Anschlüsse sind nicht dargestellt, da sie für das Verständnis der vorliegenden Erfindung nicht von Bedeutung sind.

Das Unterdeck-Element 200 umfasst an seinen Längsenden jeweils eine Stirnwand 240, 242, die sich im Wesentlichen in einer Ebene senkrecht zur Längsachse A (siehe Fig. 2) erstrecken, wobei jede der Stirnwände 240, 242 mit zwei Vorsprüngen 260, 262 versehen ist. Die Vorsprünge 260 an der Stirnwand 240 sind ringförmig ausgebildet, bei dieser Ausführungsform mit einem kreisrunden Querschnitt, während die Vorsprünge 262 aus zwei Teilvorsprüngen bestehen, zwischen denen eine Ausnehmung oder eine Lücke vorgesehen ist. Eine solche Ausgestaltung der Vorsprünge 260, 262 sorgt einerseits für ein sichere Positionierung und Befestigung, während andererseits Gewicht gespart wird.

Das Oberdeck-Element 400 umfasst an seinen Längsenden jeweils eine Stirnwand 440, 442, die sich im Wesentlichen in einer Ebene senkrecht zur Längsachse A (siehe Fig. 2) erstrecken, wobei jede Stirnwand 440, 442 mit zwei Öffnungen 460, 462 versehen ist. Die Öffnungen 460 sind als Öffnungen mit kreisrundem Querschnitt ausgebildet, während die Öffnungen 462 einen rechteckigen Querschnitt, in dieser Ausführungsform einen nahezu quadratischen Querschnitt, aufweisen.

Die Innenabmessungen der Öffnungen 460, 462 sind daher passend zu den Außenabmessungen der Vorsprüngen 260, 262 ausgebildet, so dass eine sichere Positionierung des Oberdeck-Elements 400 auf dem Unterdeck-Element 200 sichergestellt ist.

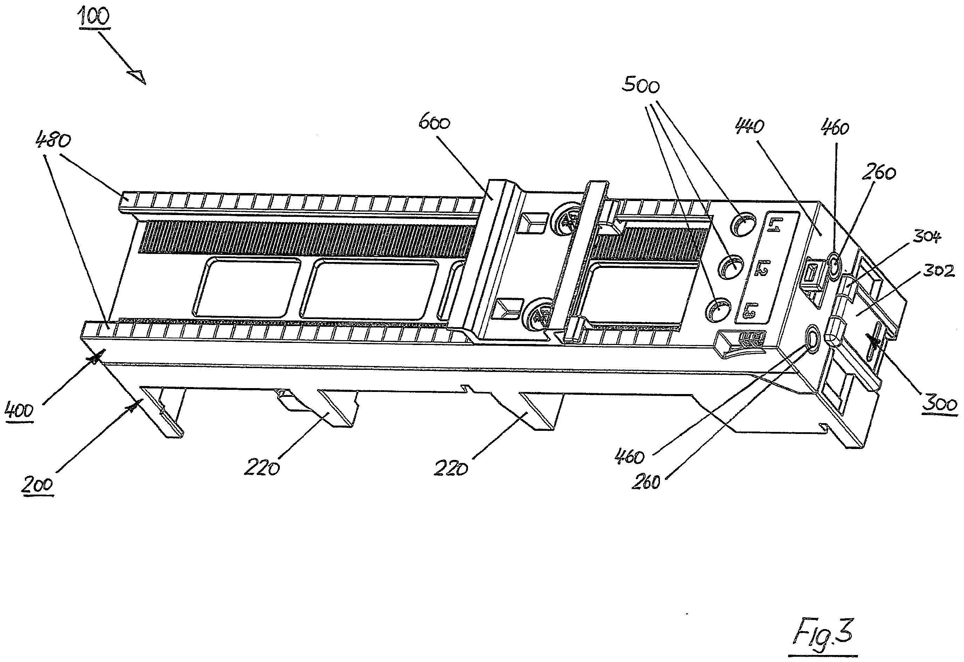

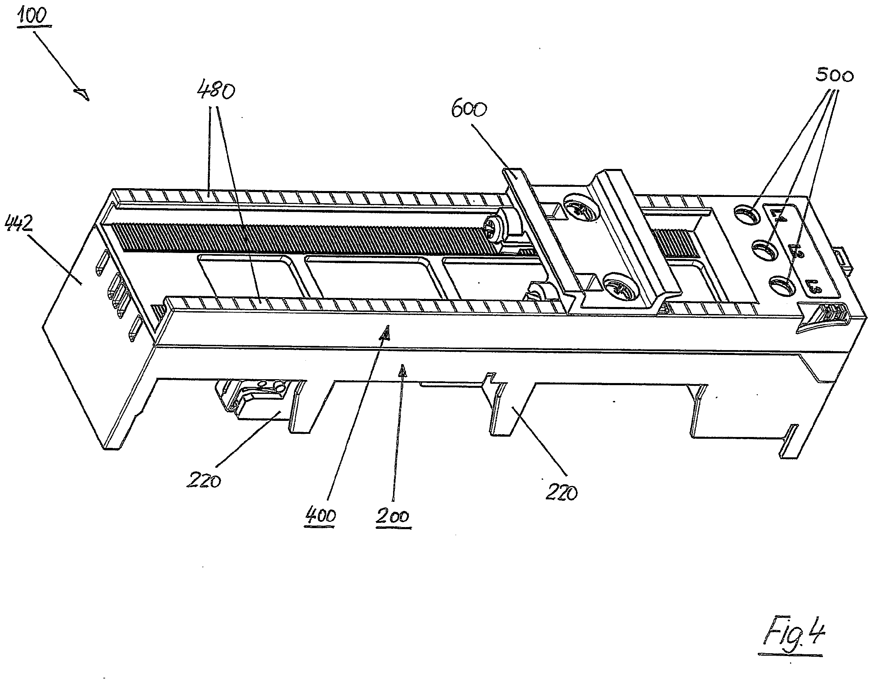

Die gezeigte Ausführungsform des Sammelschienen-Adapters 100 umfasst ferner ein Verriegelungselement 300, das einen Verriegelungsschieber 302 und eine Verriegelungsaufnahme 304 umfasst. Bei dieser Ausführungsform ist der Verriegelungsschieber 302 an einer Stirnwand 240 des Unterdeck-Elements 200 angeordnet, während die Verriegelungsaufnahme 304 an einer Stirnwand 240 des Oberdeck-Elements 400 vorgesehen ist. Die Verriegelungsaufnahme 304 besteht aus zwei Teilelementen. Die Funktionsweise des Verriegelungselements 300 wird insbesondere anhand der Figuren 3 und 4 deutlich, auf die nachfolgend eingegangen wird.

Die Figuren 3 und 4 zeigen die in den Figuren 1 und 2 gezeigte Ausführungsform des Sammelschienen-Adapters 100 in seiner Betriebsposition, in der das Oberdeck-Element 400 an dem Unterdeck-Element 200 befestigt ist. Im Hinblick auf die einzelnen Elemente wird, zur Vermeidung von Wiederholungen, auf die Beschreibung zu den Figuren 1 und 2 verwiesen.

Wie aus den Figuren 3 und 4 gut ersichtlich ist, erstrecken sich die Vorsprünge 260 des Unterdeck-Elements 200 in die zugehörigen Öffnungen 460 des Oberdeck-Elements 400 (siehe Fig. 3), während sich die Vorsprünge 262 des Unterdeck-Elements 200 in die zugehörigen Öffnungen 462 des Oberdeck-Elements 400 erstrecken (siehe Fig. 4).

Bei dieser Ausführungsform ragen die Vorsprünge 260 des Unterdeck-Elements 200 über die Ebene der Stirnwand 440 des Oberdeck-Elements 400 etwas hinaus, bei der hier gezeigten Ausführungsform um circa 0,5 mm, so dass der Nutzer auch durch Fühlen ermitteln kann, ob die Vorsprünge 260 sicher in und durch die zugehörigen Öffnungen 460 ragen.

In Fig. 3 ist insbesondere auch die Funktion des Verriegelungselements 300 gut sichtbar: Der Verriegelungsschieber 302, der sich an dem Unterdeck-Element 200 befindet, ist in seine Verriegelungsposition geschoben worden, so dass Teile des Verriegelungsschiebers 302 sich in dem Bereich des Oberdeck-Elements und zwischen die beiden Elemente der Verriegelungsaufnahme 304 erstrecken. Dies führt dazu, dass das Oberdeck-Element 400 nicht parallel zur Längsachse A (in Fig. 3 nach rechts) verschoben werden kann, so dass es auch nicht möglich ist, das Oberdeck-Element 400 von dem Unterdeck-Element 200 zu lösen.

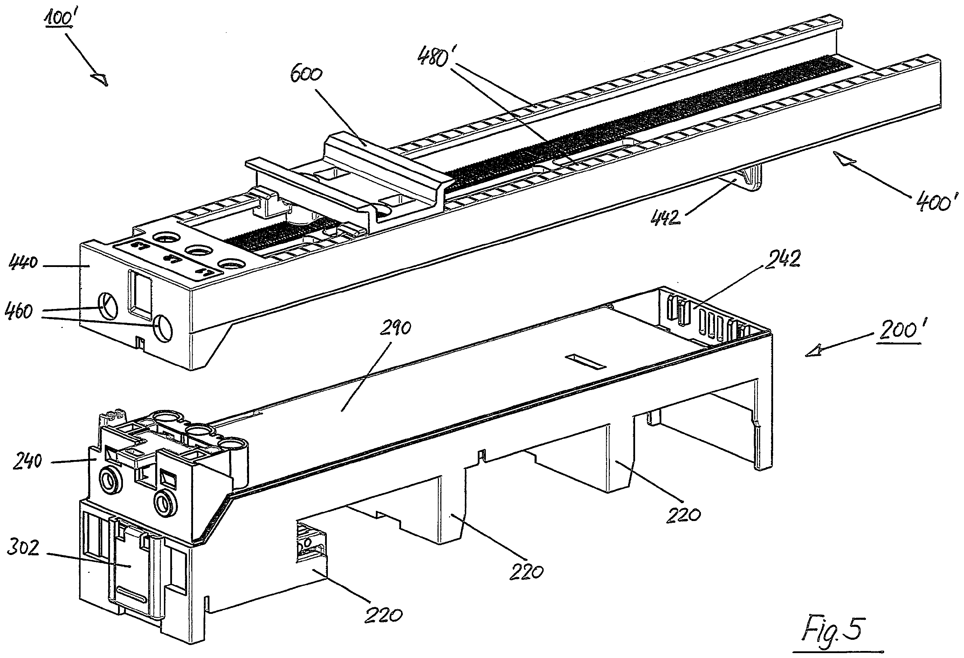

Fig. 5 zeigt eine weitere Ausführungsform eines Sammelschienen-Adapters 100' mit einem Unterdeck-Element 200' und einem Oberdeck-Element 400'. Die Elemente sind, mit Ausnahme des Oberdeck-Elements 400', weitgehend identisch mit den Elementen der in Fig. 1 gezeigten Ausführungsform, so dass zur Vermeidung von Wiederholungen auf die Beschreibung zu Fig. 1 verwiesen wird. Ähnliche oder identische Elemente sind mit identischen Bezugszeichen versehen.

Im Gegensatz zu der in Fig. 1 gezeigten Ausführungsform umfasst die in Fig. 5 gezeigte Ausführungsform ein verlängertes Oberdeck-Element 400, so dass auch die Haltestege 480' länger sind, so dass es möglich ist, auf den Haltestegen 480' mehr elektrische Geräte zu montieren.

Es ist dabei zu beachten, dass die Stirnwände 440, 442 des Oberdeck-Elements 400' identisch sind zu den in Fig. 1 gezeigten Stirnwänden, insbesondere sind sie an denselben Positionen angeordnet, so dass auch dieses verlängerte Oberdeck-Element 400' auf ein Unterdeck-Element 200' bzw. auf ein Unterdeck-Element 200, wie es in Fig. 1 dargestellt ist, aufgesetzt werden kann. Lediglich die Haltestege 480' und der zugehörige Verbindungsbogen ragen über die Stirnwand 442 hinaus.

Mit einer solchen Ausführungsform ist es möglich, mehr Raum für elektrische Geräte vorzusehen, ohne jedoch Veränderungen an dem Unterdeck-Element 200, 200' vornehmen zu müssen, was eine besondere Flexibilität ermöglicht.

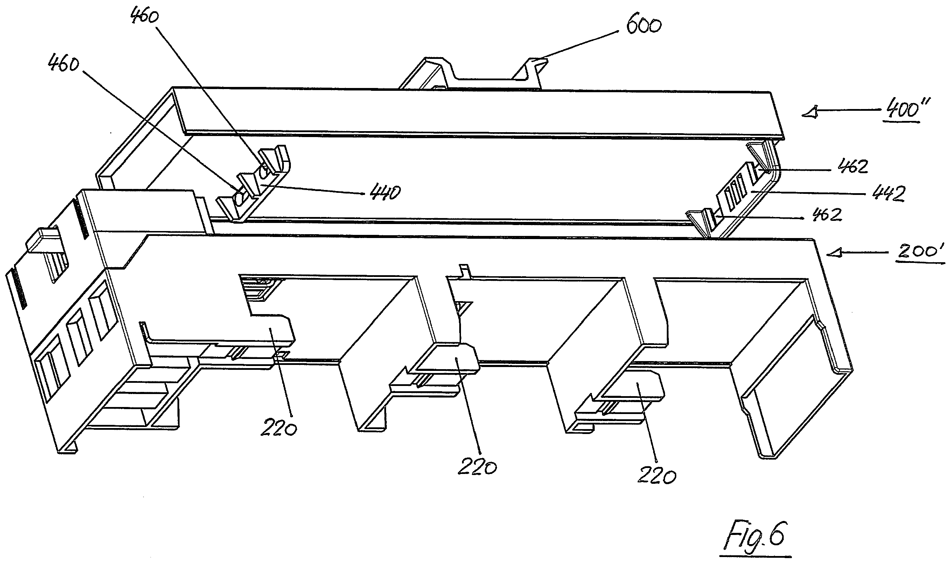

Die Figuren 6 bis 9 zeigen eine weitere Ausführungsform eines erfindungsgemäßen Sammelschienen-Adapters, wobei gleiche oder ähnliche Elemente mit identischen Bezugszeichen versehen sind.

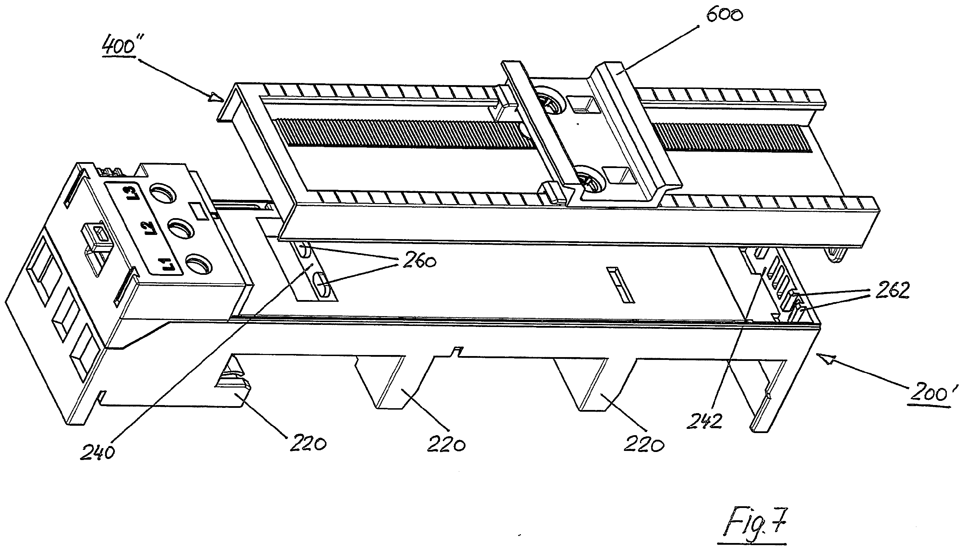

Der in den Figuren 6 bis 9 dargestellte Sammelschienen-Adapter ist sehr ähnlich zu den vorigen Ausführungsformen, jedoch ist die Stirnseite 440 des Oberdeck-Elements 400" in seiner Längsrichtung etwas versetzt angeordnet. Auch die Stirnseite 440 umfasst zwei Öffnungen 460, siehe Fig. 6, in die zugehörige Vorsprünge 260 eingreifen, die an einer Stirnseite 240 des Unterdeck-Elements 200' angeordnet sind, siehe Fig. 7.

Im Hinblick auf die zweite Stirnseite 442 mit Öffnungen 462 des Oberdeck-Elements 400", siehe Fig. 6, sowie die Vorsprünge 262 der Stirnseite 242 des Unterdeck-Elements 200', siehe Fig. 7, wird insbesondere auf die Beschreibung zu den Figuren 1 und 2 verwiesen, um Wiederholungen zu vermeiden.

Eine solche Ausführungsform hat insbesondere den Vorteil, dass in einem vorderen Bereich des Sammelschienen-Adapters, in einem Bereich, in dem sich auch die Anschlüsse für die Leitungen befinden (in Fig. 6 bis 9 im linken Bereich) zusätzliche Elektronik untergebracht werden kann, beispielsweise auch LED-Lampen, die einen Zustand der Sammelschienen-Adapter anzeigen.

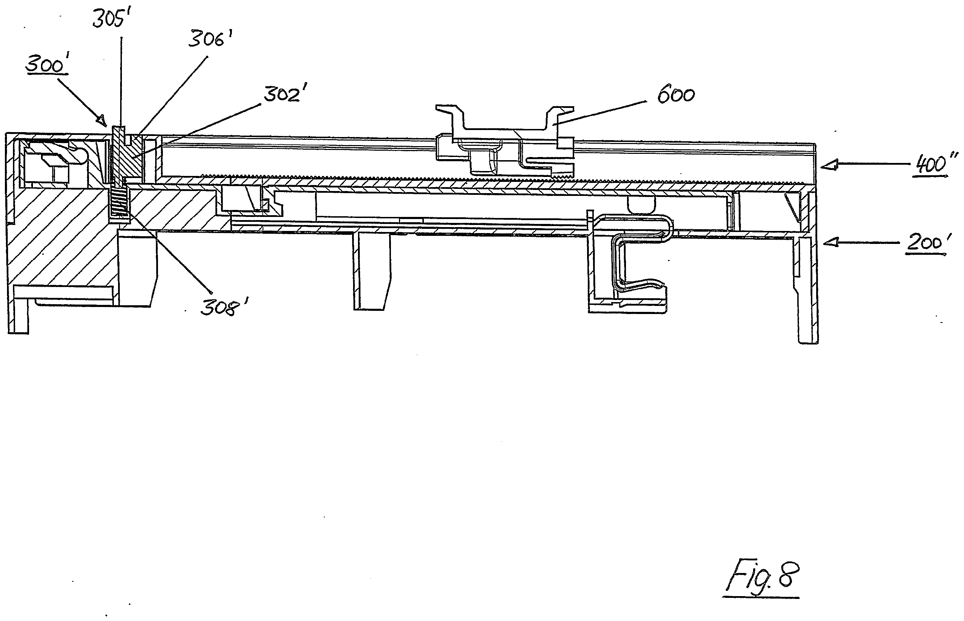

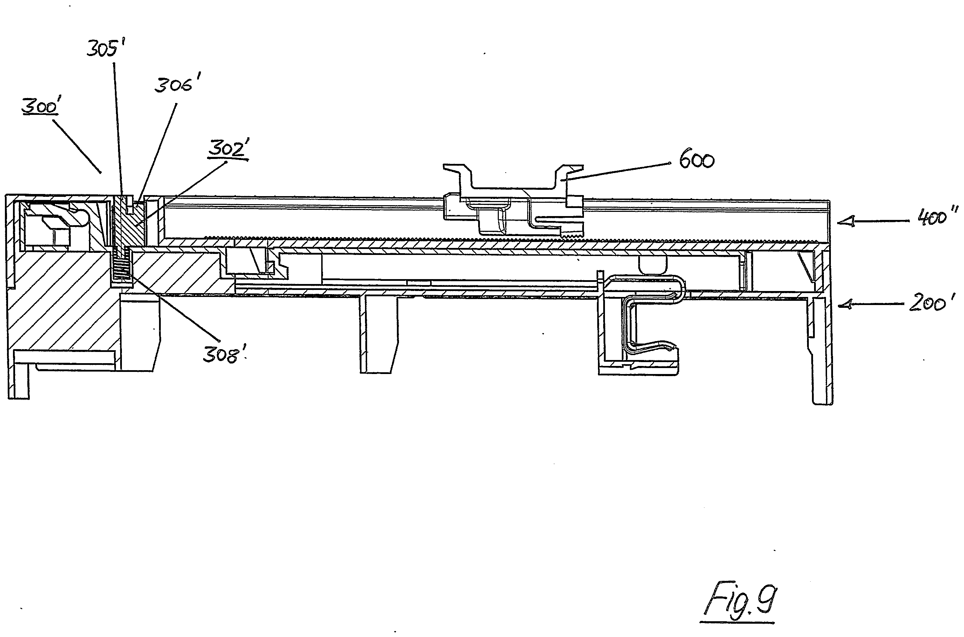

Die Figuren 8 und 9 zeigen den Sammelschienen-Adapter 100 in einem Zustand, in dem das Oberdeck-Element 400" auf dem Unterdeck-Element 200' befestigt ist.

In den Figuren 8 und 9 ist insbesondere die Verriegelungsvorrichtung 300' gut erkennbar, die in ihrer Verriegelungsposition eine Verschiebung des Oberdeck-Elements 400" relativ zum Unterdeck-Element 200' in einer Richtung parallel oder antiparallel zur Längsachse des Unterdeck-Elements 200' verhindert.

Die Verriegelungsvorrichtung 300' umfasst einen Verriegelungsschieber 302', der an dem Unterdeck-Element 200' befestigt und mittels einer Federvorrichtung 308' in einer Verriegelungsposition vorgespannt ist.

Wie insbesondere in Fig. 8 deutlich ersichtlich ist, in der sich der Verriegelungsschieber 302' in seiner oberen Position, also in der Verriegelungsposition, befindet, liegt ein Vorsprung 306' des Verriegelungsschiebers 302' so vor einer Kante des Oberdeck-Elements 400", dass eine Verschiebung des Oberdeck-Elements 400" in einer Richtung parallel oder antiparallel zur Längsachse des Unterdeck-Elements 200', in Fig. 8 nach links, zuverlässig verhindert wird, so dass das Oberdeck-Element 400" nicht von dem Unterdeck-Element 200' abgenommen werden kann.

Fig. 9 zeigt die in Fig. 8 gezeigte Ausführungsform, bei der sich jedoch die Verriegelungsvorrichtung 300' in ihrer entriegelten Position befindet, was dadurch geschehen kann, dass ein Nutzer einen Vorsprung 305' in Richtung auf das Unterdeck-Element 200' drückt, in den Fig. 8 und 9 nach unten, so dass der Verriegelungsschieber 302' entgegen der Federspannung des Federelements 308' in Richtung auf das Unterdeck-Element 200' gedrückt wird, so dass der Vorsprung 306' ebenfalls nach unten bewegt wird, so dass eine Kante des Oberdeck-Elements 400" nun in Richtung zur Längsachse des Unterdeck-Elements, in den Figuren 8 und 9 nach links, bewegt werden kann, so dass das Oberdeck-Element 400" von dem Unterdeck-Element 200' abgenommen werden kann.

Die in der Beschreibung, den Ansprüchen und den Zeichnungen offenbarten Merkmale der Erfindung können sowohl einzeln als auch in beliebigen Kombinationen für die Verwirklichung wesentlich sein.

## Patentansprüche

1. Sammelschienen-Adapter (100) mit einem Unterdeck-Element (200, 200'), das auf seiner Unterseite mindestens ein Befestigungselement (220) zum Befestigen des Sammelschienen-Adapters (100) an einer oder mehreren Sammelschienen umfasst, und mit einem Oberdeck-Element (400, 400', 400") zum Befestigen von elektrischen Geräten, das lösbar mit dem Unterdeck-Element (200, 200') verbindbar ist, wobei der Sammelschienen-Adapter (100) ferner eine Verriegelungsvorrichtung (300, 300') umfasst, die in ihrer Verriegelungsposition Verschiebungen des Oberdeck-Elements (400, 400', 400") relativ zum Unterdeck-Element (200, 200') in eine Richtung parallel zur Längsachse (A) des Unterdeck-Elements (200, 200') verhindert, **dadurch gekennzeichnet, dass**
eines (400, 400', 400") der Deck-Elemente (200, 200', 400, 400', 400"), entweder das Oberdeck-Element (400, 400', 400") oder das Unterdeck-Element (200, 200'), zwei Stirnwände (440, 442) mit jeweils mindestens einer Öffnung (460, 462) aufweist und das andere (200, 200') der Deck-Elemente (200, 200', 400, 400', 400") zwei Stirnwände (240, 242) mit jeweils mindestens einem Vorsprung (260, 262) aufweist, wobei sich die Stirnwände jeweils an den Längsenden des Unterdeck-Elements bzw. des Oberdeck-Elements oder mit Abstand von den Längsenden in Längsrichtung zwischen den Längsenden der Deck-Elemente befinden,
wobei Unterdeck-Element (200, 200') und Oberdeck-Element (400, 400', 400") so ausgebildet sind, dass das Oberdeck-Element (400, 400', 400") in einer Bewegungsrichtung relativ zu dem Unterdeck-Element (200, 200') auf das Unterdeck-Element (200, 200') aufgesetzt werden kann, so dass es in eine Betriebsposition gebracht werden kann, wobei diese relative Bewegungsrichtung zumindest eine Bewegungskomponente parallel zur Längsachse (A) des Unterdeck-Elements (200, 200') umfasst, so dass in der Betriebsposition des Sammelschienen-Adapters (100) die Vorsprünge (260, 262) des anderen Deck-Elements (200, 200') zumindest teilweise in zugehörige Öffnungen (460, 462) des einen Deck-Elements (400, 400', 400") hineinragen.

2. Sammelschienen-Adapter nach Anspruch 1, wobei das eine Deck-Element (400, 400', 400") jeweils zwei Öffnungen (460, 462) in jeder Stirnwand (440, 442) umfasst und das andere Deck-Element (200, 200') jeweils zwei Vorsprünge (260, 262) auf jeder Stirnwand (240, 242) umfasst.

3. Sammelschienen-Adapter nach Anspruch 1 oder 2, wobei mindestens ein Vorsprung (262) aus zwei Teilvorsprüngen besteht, zwischen denen eine Ausnehmung vorgesehen ist.

4. Sammelschienen-Adapter nach einem der vorhergehenden Ansprüche, **dadurch gekennzeichnet, dass** mindestens ein Vorsprung (260) ringförmig ausgebildet ist.

5. Sammelschienen-Adapter nach einem der vorhergehenden Ansprüche, **dadurch gekennzeichnet, dass** mindestens ein Vorsprung (260, 262) so ausgebildet ist, dass er in einer Betriebsposition des Sammelschienen-Adapters (100) durch eine zugehörige Öffnung (460, 462) des einen Deck-Elements (400, 400', 400") hindurchragt.

6. Sammelschienen-Adapter nach einem der vorhergehenden Ansprüche, **dadurch gekennzeichnet, dass** die Öffnungen (460, 462) des einen Deck-Elements (200, 200', 400, 400', 400") und die Vorsprünge (260, 262) des anderen Deck-Elements (200, 200') ausschließlich auf Stirnwänden des jeweiligen Deck-Elements vorgesehen sind.

7. Sammelschienen-Adapter nach einem der vorhergehenden Ansprüche, **dadurch gekennzeichnet, dass** das eine Deck-Element, das mindestens eine Öffnung (460, 462) aufweist, das Oberdeck-Element (400, 400', 400") ist und das andere Deck-Element, das mindestens einen Vorsprung (260, 262) aufweist, das Unterdeck-Element (200, 200') ist.

8. Sammelschienen-Adapter nach einem der vorhergehenden Ansprüche, **dadurch gekennzeichnet, dass** eine Verriegelungsvorrichtung (300) vorgesehen ist, die einen Verriegelungsschieber (302) und mindestens eine Verriegelungsaufnahme (304) umfasst, in die der Verriegelungsschieber (302) zumindest teilweise eingreift, wenn er sich in seiner Verriegelungsposition befindet und sich der Sammelschienen-Adapter (100) in seiner Betriebsposition befindet.

9. Sammelschienen-Adapter nach Anspruch 8, **dadurch gekennzeichnet, dass** sich der Verriegelungsschieber (302) an der Außenseite einer Stirnwand (240) des Unterdeck-Elements (200) befindet, während sich die mindestens eine Verriegelungsaufnahme (304) an einer Stirnwand (440) des Oberdeck-Elements (400, 400', 400") befindet.

10. Sammelschienen-Adapter nach einem der Ansprüche 1 bis 7, **dadurch gekennzeichnet, dass** eine Verriegelungsvorrichtung (300') vorgesehen ist, die einen Verriegelungsschieber (302') umfasst, der an dem Unterdeck-Element (200') angeordnet ist und zwischen einer Verriegelungsposition und einer Entriegelungsposition bewegbar ist, wobei die Verriegelungsvorrichtung (300') ferner eine Federvorrichtung (308') umfasst, die den Verriegelungsschieber (302') in seiner Verriegelungsposition vorspannt.

11. Sammelschienen-Adapter nach einem der vorhergehenden Ansprüche, **dadurch gekennzeichnet, dass** ein Rastelement an mindestens einem der Vorsprünge des einen Deck-Elements vorgesehen ist.

12. Sammelschienen-Adapter nach einem der vorhergehenden Ansprüche, **dadurch gekennzeichnet, dass** das Unterdeck-Element (200, 200') ferner ein Berührungsschutzelement (290) umfasst, das so ausgebildet ist, dass es einen Berührungsschutz sicherstellt, wenn das Oberdeck-Element (400, 400', 400") von dem Unterdeck-Element (200, 200') abgenommen ist.

13. Sammelschienen-Adapter nach Anspruch 12, **dadurch gekennzeichnet, dass** das Berührungsschutzelement (290) mit dem Unterdeck-Element (200, 200') fest verbunden ist.

14. Sammelschienen-Adapter nach einem der vorhergehenden Ansprüche, **dadurch gekennzeichnet, dass** zusätzlich mindestens eine Tragschiene (600) zum Befestigen von elektrischen Geräten vorgesehen ist, die in unterschiedlichen Positionen an dem Oberdeck-Element (400, 400', 400") des Sammelschienen-Adapters (100) befestigt ist.

## Claims

1. A busbar adapter (100) having a lower covering element (200, 200') which on the lower face thereof comprises at least one fastening element (220) for fastening the busbar adapter (100) to one or more busbars, and an upper covering element (400, 400', 400'') for fastening electrical devices, which can be connected detachably to the lower covering element (200, 200'), the busbar adapter (100) also comprising a locking device (300, 300') which, when in the locking position thereof, prevents displacement of the upper covering element (400, 400', 400'') relative to the lower covering element (200, 200') in a direction parallel to the longitudinal axis (A) of the lower covering element (200, 200'),
**characterised in that**
one (400, 400', 400'') of the covering elements (200, 200', 400, 400', 400"), either the upper covering element (400, 400', 400'') or the lower covering element (200, 200'), has two end walls (440, 442), each having at least one opening (460, 462), and the other (200, 200') of the covering elements (200, 200', 400, 400', 400'') has two end walls (240, 242), each having at least one protrusion (260, 262),
wherein the end walls are in each case situated on the longitudinal ends of the lower covering element or of the upper covering element or at a distance from the longitudinal ends in the longitudinal direction between the longitudinal ends of the covering elements,
wherein the lower covering element (200, 200') and the upper covering element (400, 400', 400'') are designed such that the upper covering element (400, 400', 400'') can be placed onto the lower covering element (200, 200') in a movement direction relative to the lower covering element (200, 200'), so that it can be brought into a use position, wherein this relative movement direction comprises at least one movement component parallel to the longitudinal axis (A) of the lower covering element (200, 200'),
so that, when the busbar adapter (100) is in the use position, the protrusions (260, 262) of the other covering element (200, 200') at least partially project into associated openings (460, 462) in the one covering element (400, 400', 400").

2. The busbar adapter according to Claim 1, wherein one covering element (400, 400', 400'') comprises two openings (460, 462) in each end wall (440, 442), and the other covering element (200, 200') comprises two protrusions (260, 262) on each end wall (240, 242).

3. The busbar adapter according to Claim 1 or 2, wherein at least one protrusion (262) consists of two part-protrusions, between which a recess is provided.

4. The busbar adapter according to any one of the preceding claims, **characterised in that** at least one protrusion (260) is annular.

5. The busbar adapter according to any one of the preceding claims, **characterised in that** at least one protrusion (260, 262) is designed such that it projects through an associated opening (460, 462) in one covering element (400, 400', 400'') when the busbar adapter (100) is in a use position.

6. The busbar adapter according to any one of the preceding claims, **characterised in that** the openings (460, 462) of one covering element (200, 200', 400, 400', 400'') and the protrusions (260, 262) of the other covering element (200, 200') are only provided on end walls of the covering element in question.

7. The busbar adapter according to any one of the preceding claims, **characterised in that** one covering element which has at least one opening (460, 462) is the upper covering element (400, 400', 400"), and the other covering element which has at least one protrusion (260, 262) is the lower covering element (200, 200').

8. The busbar adapter according to any one of the preceding claims, **characterised in that** a locking device (300) is provided, which comprises a locking slide (302) and at least one locking receptacle (304) into which the locking slide (302) at least partially engages when it is in a locking position and the busbar adapter (100) is in the use position thereof.

9. The busbar adapter according to Claim 8, **characterised in that** the locking slide (302) is situated on the outside of an end wall (240) of the lower covering element (200), while the at least one locking receptacle (304) is situated on an end wall (440) of the upper covering element (400, 400', 400").

10. The busbar adapter according to any one of Claims 1 to 7, **characterised in that** a locking device (300') is provided, which comprises a locking slide (302') which is arranged on the lower covering element (200') and can be moved between a locking position and an unlocking position, wherein the locking device (300') further comprises a spring device (308') which prestresses the locking slide (302') into the locking position thereof.

11. The busbar adapter according to any one of the preceding claims, **characterised in that** a latching element is provided on at least one of the protrusions of one covering element.

12. The busbar adapter according to any one of the preceding claims, **characterised in that** the lower covering element (200, 200') also comprises a touch protection element (290) which is designed such that it ensures touch protection when the upper covering element (400, 400', 400") is removed from the lower covering element (200, 200').

13. The busbar adapter according to Claim 12, **characterised in that** the touch protection element (290) is fixedly connected to the lower covering element (200, 200').

14. The busbar adapter according to any one of the preceding claims, **characterised in that** additionally at least one support rail (600) for fastening electrical devices is provided, which is fastened in different positions on the upper covering element (400, 400', 400") of the busbar adapter (100).

## Revendications

1. Adaptateur de barre omnibus (100) comportant un élément de pont inférieur (200, 200') qui comprend sur sa face inférieure au moins un élément de fixation (220) pour la fixation de l'adaptateur de barre omnibus (100) à une ou plusieurs barres omnibus et un élément de pont supérieur (400, 400', 400'') pour la fixation d'appareils électriques qui est connectable de manière dissociable à l'élément de pont inférieur (200, 200'), l'adaptateur de barre omnibus (100) comprenant en outre un dispositif de verrouillage (300, 300') qui, dans sa position de verrouillage, évite les décalages de l'élément de pont supérieur (400, 400', 400'') par rapport à l'élément de pont inférieur (200, 200') dans un sens parallèle à l'axe longitudinal (A) de l'élément de pont inférieur (200, 200'),
**caractérisé en ce**
**qu'**un (400, 400', 400'') des éléments de pont (200, 200', 400, 400', 400'') présente soit l'élément de pont supérieur (400, 400', 400''), soit l'élément de pont inférieur (200, 200'), deux parois avant (440, 442) dotées respectivement d'au moins une ouverture (460, 462) et l'autre (200, 200') des éléments de pont (200, 200', 400, 400', 400'') deux parois avant (240, 242) dotées respectivement d'au moins une saillie (260, 262), les parois avant se trouvant respectivement aux extrémités longitudinales de l'élément de pont inférieur ou de l'élément de pont supérieur ou à distance des extrémités longitudinales dans le sens longitudinal entre les extrémités longitudinales les éléments de pont,
l'élément de pont inférieur (200, 200') et l'élément de pont supérieur (400, 400', 400'') étant conçus de manière à ce que l'élément de pont supérieur (400, 400', 400'') puisse être posé dans un sens de mouvement par rapport à l'élément de pont inférieur (200, 200') sur l'élément de pont inférieur (200, 200') de sorte qu'il puisse être amené dans une position de fonctionnement, ce sens relatif de mouvement comprenant au moins une composante de mouvement parallèle à l'axe longitudinal (A) de l'élément de pont inférieur (200, 200'),
de sorte que, dans la position de fonctionnement de l'adaptateur de barre omnibus (100), les saillies (260, 262) de l'autre élément de pont (200, 200') dépassent du moins partiellement dans des orifices corrélatifs (460, 462) de l'élément de pont (400, 400', 400'').

2. Adaptateur de barre omnibus selon la revendication 1, dans lequel l'élément de pont (400, 400', 400'') comprend respectivement deux ouvertures (460, 462) dans chaque paroi avant (440, 442) et l'autre élément de pont (200, 200') respectivement deux saillies (260, 262) sur chaque paroi avant (240, 242).

3. Adaptateur de barre omnibus selon la revendication 1 ou 2, dans lequel au moins une saillie (262) est composée de deux sous-saillies entre lesquelles il est prévu une échancrure.

4. Adaptateur de barre omnibus selon une des revendications précédentes, **caractérisé en ce qu'**au moins une saillie (260) a une conformation annulaire.

5. Adaptateur de barre omnibus selon une des revendications précédentes, **caractérisé en ce qu'**au moins une saillie (260, 262) est réalisée de manière à passer à travers une ouverture corrélative (460, 462) de l'élément de pont (400, 400', 400'') dans une position de fonctionnement de l'adaptateur de barre omnibus (100).

6. Adaptateur de barre omnibus selon une des revendications précédentes, **caractérisé en ce que** les ouvertures (460, 462) de l'élément de pont (200, 200', 400, 400', 400") et les saillies (260, 262) de l'autre élément de pont (200, 200') sont prévues exclusivement sur les parois avant de l'élément de pont respectif.

7. Adaptateur de barre omnibus selon une des revendications précédentes, **caractérisé en ce que** l'élément de pont qui présente au moins une ouverture (460, 462) est l'élément de pont supérieur (400, 400', 400'') et l'autre élément de pont qui présente au moins une saillie (260, 262) est l'élément de pont inférieur (200, 200').

8. Adaptateur de barre omnibus selon une des revendications précédentes, **caractérisé en ce qu'**il est prévu un dispositif de verrouillage (300) qui comprend une tirette de verrouillage (302) et au moins un support de verrouillage (304) dans lequel la tirette de verrouillage (302) s'engrène au moins partiellement lorsqu'elle se trouve dans sa position de verrouillage et lorsque l'adaptateur de barre omnibus (100) se trouve dans sa position de fonctionnement.

9. Adaptateur de barre omnibus selon la revendication 8, **caractérisée en ce que** la tirette de verrouillage (302) se trouve sur la face extérieure d'une paroi avant (240) de l'élément de pont inférieur (200), tandis que l'au moins un support de verrouillage (304) se trouve au niveau d'une paroi avant (440) de l'élément de pont supérieur (400, 400', 400'').

10. Adaptateur de barre omnibus selon une des revendications 1 à 7, **caractérisé en ce qu'**il est prévu un dispositif de verrouillage (300') qui comprend une tirette de verrouillage (302') qui est disposée au niveau de l'élément de pont inférieur (200') et est mobile entre une position de verrouillage et une position de déverrouillage, le dispositif de verrouillage (300') comprenant en outre un dispositif de ressort (308') qui précontraint la tirette de verrouillage (302') dans sa position de verrouillage.

11. Adaptateur de barre omnibus selon une des revendications précédentes, **caractérisé en ce qu'**il est prévu un élément d'enclenchement au niveau d'au moins une des saillies de l'élément de pont.

12. Adaptateur de barre omnibus selon une des revendications précédentes, **caractérisé en ce que** l'élément de pont inférieur (200, 200') présente en outre un élément anti-contact (290) qui est réalisé de manière à assurer une protection contre le contact lorsque l'élément de pont supérieur (400, 400', 400'') est retiré de l'élément de pont inférieur (200, 200').

13. Adaptateur de barre omnibus selon la revendication 12, **caractérisé en ce que** l'élément anti-contact (290) est connecté fixement à l'élément de pont inférieur (200, 200').

14. Adaptateur de barre omnibus selon une des revendications précédentes, **caractérisé en ce qu'**il est prévu en plus pour la fixation d'appareils électriques au moins un rail porteur (600) qui est fixé à différentes positions à l'élément de pont supérieur (400, 400', 400'') de l'adaptateur de barre omnibus (100).
